# EUROPEAN PATENT SPECIFICATION

(11) **EP 4 238 948 B1**
(45) Date of publication and mention of the grant of the patent: **12.08.2026**
(21) Application number: 22159520.0
(22) Date of filing: 01.03.2022
(51) Int. Cl.: C04B 7/36

(54) **METHOD AND PLANT FOR TREATING RAW-MEAL IN A CEMENT CLINKER MANUFACTURING PROCESS**
VERFAHREN UND ANLAGE ZUR BEHANDLUNG VON ROHMEHL IN EINEM ZEMENTKLINKERHERSTELLUNGSPROZESS
PROCÉDÉ ET INSTALLATION DE TRAITEMENT DE FARINE CRUE DANS UN PROCESSUS DE FABRICATION DE CLINKER DE CIMENT

(43) Date of publication of application: 06.09.2023
(73) Proprietor: Südbayerisches Portland-Zementwerk Gebr. Wiesböck & Co. GmbH, 83101 Rohrdorf (DE)
(72) Inventor: Dr. Stadler, Philipp, 83101 Rohrdorf (DE); Haas, Michael, 83101 Rohrdorf (DE); Dr. Leibinger, Helmut, 83101 Rohrdorf (DE)
(74) Representative: Lohr, Jöstingmeier & Partner Patent- und Rechtsanwälte mbB

(56) References cited:
- WO-A2-02/04377
- CN-A- 1 396 135
- SINGH N B ET AL: "Formation of CaO from thermal decomposition of calcium carbonate in the presence of carboxylic acids", JOURNAL OF THERMAL ANALYSIS AND CALORIMETRY, KLUWER, DORDRECHT, NL, vol. 89, no. 1, 1 July 2007 (2007-07-01), pages 159 - 162, XP037846605, ISSN: 1388-6150, [retrieved on 20070712], DOI: 10.1007/S10973-006-7565-7
- ROMAN MATTHESSEN ET AL: "Electrocarboxylation: towards sustainable and efficient synthesis of valuable carboxylic acids", BEILSTEIN JOURNAL OF ORGANIC CHEMISTRY, vol. 10, 27 October 2014 (2014-10-27), pages 2484 - 2500, XP055648781, DOI: 10.3762/bjoc.10.260

## Description

### Field of the invention

The invention relates to the field of cement clinker manufacturing and in particular to the field of raw-meal processing in cement clinker manufacturing.

### Description of the related art

Cement clinker, briefly as well referred to as 'clinker', is the basis for concrete and hence an important intermediate product in the building-construction industry. The cement clinker process, or briefly 'clinker process' has been described in many publications (see e.g. Dr. Harder "Der Herstellungsprozess", published in ZKG-Handbuch Zementanlagenbau 2013/2014, p. 20 to 37, Bauverlag BV, Güters-loh) and hence we will reiterate only the basic steps: First, clay and limestone are dried and milled to obtain a so called "raw-meal". Subsequently, this raw meal is heated up until the calcium carbonate (CaCO₃) of the limestone decays into calcium oxide (CaO) and Carbon dioxide (CO₂). The corresponding reaction 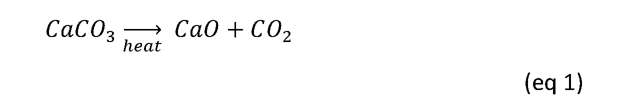 is referred to as decarbonation or calcination step. In state-of-the-art cement clinker plants, the raw meal calcination takes place mainly in a so called *"calciner",* being a heated reactor upstream of a kiln for sintering the calcined raw-meal to clinker. The CO₂ being released by the calcination step is typically a part of the exhaust gas of the calciner and hence of the cement clinker line.

Sintering takes place typically at 1350°C to 1550°C, often 1450°C are reported. The hot clinker is discharged to a clinker cooler, being a heat exchanger to recuperate the heat from the hot clinker while in turn cooling the clinker down. In typical clinker cooler installations air (or another coolant) is blown through a clinker bed on a cooling grate and thereby heated up. The hot air is provided as so called *"secondary air"* to the kiln and as so called *"tertiary air"* to the calciner.

This process requires a huge amount of thermal energy, being produced generally by burning carbon-based fuels (coal, natural gas, organic waste, paper, tires, plastics, ...). Hence, the process not only releases a huge amount of *CO*₂ in the calcination step, in addition, the fuel burn as well provides for a significant *CO*₂ release. Presently (2022), it is estimated that the clinker production contributes to about 8% of the world's *CO*₂ emissions. Efforts have been made to adapt the clinker process to reduce the *CO*₂-emissions of the clinker process. One of these is a so-called *carbon-capture and sequestration* ("CSS") approach. In the CSS approach, the clinker process is modified to produce exhaust gas with a high CO₂ concentration. The CO₂ may then be stored in deep geological formations.

N. B. Singh and N. P. Singh: Formation of CaO from thermal decomposition of calcium carbonate in the presence of carboxylic acids, in JTAC, Vol. 89 (2007), p. 159ff reports that the presence of 5% tartaric, succinic and citric acids during the decomposition of CaCO3 does not lower the decomposition temperature and that carboxylates are formed instead, which decompose at lower temperatures. They further report that the size distribution and the morphology of such obtained *CaO* differs from the size distribution and the morphology *CaO* obtained by thermal decomposition of *CaCO*₃. As consequence of these differences the hydration activity of *CaO* obtained by thermal decomposition of carboxylates shall be different to the hydration activity of *CaO* obtained by thermal decomposition of *CaCO*₃.

WO 01/04377 A2 suggests separating kiln dust of a cement clinker line, mixing it with water and feeding it to the kiln's material inlet. A neutralizing agent can be added to adjust the pH of the mixture.

CN1396135A teaches producing the sulphur silicate cement by grinding and mixing the following raw materials in proportion: Limestone 78~80% , Clay 8 ~ 14%, Iron ore 4 to 7% and Citric acid slag 4 ~ 6% (mass percentages).The mixture is heated in a kiln to 1350-1400°C to thereby obtain cement clinker.

Roman Matthessen, Jan Fransaer, Koen Binnemans and Dirk E. De Vos: Electro-carboxylation: towards sustainable and efficient synthesis of valuable carboxylic acids (Beilstein Journals, Beilstein J. Org. Chem. 2014, 10, 2484-2500) provide of review on methods used in the electrochemical synthesis of carboxylic acids from carbon dioxide.

### Summary of the invention

The problem to be solved by the invention is to reduce the *CO*₂-emission of the clinker process while avoiding the costs for storing the *CO*₂ in geological formations.

Solutions of the problem are described in the independent claims. The dependent claims relate to further improvements of the invention.

In an embodiment, the invention provides a method. The method enables to remove at least a portion of the CO₂ being produced in a cement clinker line or components of the cement clinker line from the exhaust gas of the cement clinker line. The method comprises converting a CaCO₃ comprising raw meal into calcined raw meal and at least CO₂. The CaCO₃ comprising raw meal is usually ground limestone and may comprise other components like, for example, clay. In this process step it is only relevant that the limestone comprising raw meal comprises at least CaCO₃. The term limestone comprising raw meal shall be considered to include any other CaCO₃ source as well and in this sense is a synonym for CaCO₃-comprising raw meal or simply raw meal. This "raw meal is to be distinguished from the terms "intermediate raw meal" and "calcined raw meal", which will be explained below.

Alternatively, or in addition, the method may comprise sintering calcined raw meal in a kiln, thereby clinker. Further CO₂ may be produced by burning carbon-based fuels to heat the kiln. In addition, in some cement clinker line installations, the raw meal provided to the kiln is not or only partially calcined, i.e., the reaction described by (eq 1) may take place in the kiln as well. But there are as well kilns which essentially produce no CO₂, be it because the fuel being used is Hydrogen (H₂) or because they are heated by electricity- the latter being an alternative under discussion for future cement clinker lines. The method may further comprise separating at least a portion of the CO₂ from the calcined raw meal and/or the clinker, respectively. Such separation can be obtained by filtering or other dedusting techniques (like for example inertial separation or electrostatic precipitation). Only for linguistic simplicity, herein we will not distinguish between filtering, precipitating or other dedusting principles and the verbs *to filter* and the noun *filter* shall be considered to include any other gas-solid separation technique, or more generally any other fluid-solid separation technique as well. Correspondingly herein we will not distinguish between filters, electrostatic precipitators, or inertial separators like, e.g., cyclones.

The separated CO₂ may still be mixed with other gases like CO, N₂, H₂O_{(g)} or the like which are typically comprised in kiln exhaust gas and/or calciner exhaust gas. Preferably, in another optional step, at least a portion of the separated CO₂ may be dissolved in a first carboxylic acid and/or a first sulfonic acid. Dissolving can be obtained by simply providing a flow of CO₂ into the acid, which may be an aqueous acid. In industrial cement plants one may use a scrubber for the dissolving step, herein referred to as first scrubber or dissolving scrubber. "First" shall not imply that there is necessarily a second scrubber, but instead enable to linguistically distinguish the optional first scrubber from other optional scrubbers that will be explained below.

The method preferably further comprises reducing the dissolved CO₂ electrochemically. This reduction may take place at cathode of an electrolytic cell and can be summarized as:

2*CO*₂ + 4*H*⁺ *+* 2*H*₂*O +* 4*e*⁻ → 2*HCO*₂*H +* 2*H*₂*O* *(eq 2)*

Other carboxylic acids may be formed similarly:

*nCO*₂ + (6*n* - *4*)*H*⁺ *+* 2*H*₂*O* + *(6n* - 4)*e*⁻ → *H*_{2*n*-1}*CₙO*₂*H* + 2*nH*₂*O* *(eq 3)*

Further, co-reactions like the followings have been observed.

*CO*₂ + 2*H*⁺ *+* 2*e*⁻ → *CO + H*₂*O* *(eq 4)*

2*H⁺ + 2e⁻* → *H₂* *(eq 5)*

Alternatively, the separated CO₂ may be liquified (e.g., at -20°C and 20bars), for example using a CO₂-liquefier. Such liquified CO₂ may be reduced electrochemically, for example by using a CO₂-liquefier. This reduction may take place at cathode of an electrolytic cell and can be summarized as:

2*CO*₂*,ₗ* + 4*H*⁺ + 2*H*₂*O* + 4*e*⁻ → 2*HCO*₂*H* + 2*H*₂*O* *(eq 6)*

This reaction may be generalized as well and then reads:

*nCO*_{2*,l*} + *(6n* - 4*)H*⁺ *+* 2*H*₂*O* + (6*n* - 4)*e*⁻ → *H*_{2*n*-1}*CₙO*₂*H* + 2*nH*₂*O* *(eq 7)*

The freezing point of water-formic acid at a given stoichiometric ratio is significantly below the freezing point of water. For example, at a given stoichiometric ratio of 1:1 it is -35.5°C, but changing the stoichiometric ratio result in shift of the freezing point. Similarly, the freezing point of water-carboxylic acid mixtures is below 0°C. Depending on the temperature and pressure of the liquified *CO*₂, it may be advantageous to add a (preferably strong) acid in the anode chamber of the electrolytic cell to prevent freezing of co-transferred water. Examples for such acids may be sulfuric acid, fluoroboric acid or any other acid that is liquid and compatible with the preferred anode reaction and *O*₂ evolution. Only to avoid misunderstandings, it is recalled that an acid is considered to be strong if the pKₐ-value is at or below -2.

The first carboxylic acid and/or first sulfonic acid may be used as a protonic (preferably aqueous) electrolyte and as well to adjust the pH-value in the anode chamber of the electrolytic cell. Electrolytic reduction of the CO₂ may convert the CO₂ into a second carboxylic acid. A byproduct of the reduction may be CO. H₂ may be considered as a further (competing) byproduct. Preferred examples of the first as well as of the second carboxylic acid are formic acid (HCOOH); systematic IUPAC name: methanoic acid) and acetic acid (CH₃COOH; systematic IUPAC name: ethanoic acid). Using an acid as electrolyte disfavors the formation of carbonate ions described by:

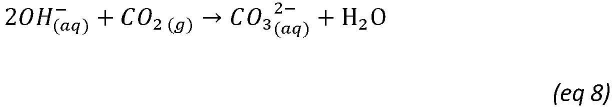

This carbonate formation process described by *(eq 8)* takes place if alkaline conditions are present in the vicinity of the electrode. Thus, rather than converting CO₂ to a usable carbon-based product, e.g., a carboxylic acid, for every H₂O-electron pair transferred during CO₂-reduction one hydroxide ion (*OH*⁻) is formed.

Two of these hydroxide ions remove a CO₂ from the process by forming carbonate instead of the intended CO₂-reduction based product.

In other words, the preferred acidic (*pH <* 7) electrolyte reduces the consumption of the CO₂ in the electrolyte and hence increases carbon utilization efficiency. For the carboxylic acids, like e.g., formic acid and acetic acid avoiding the formation of *HCO*₃⁻ results in saving six electrons per CO₂ reacted, that otherwise must be provided by the current source. Electrolyzing in an acidic regime thus reduces the required electrical energy per reacted CO₂-molecule. Without being bound to theory, it is believed that if *H*₃*O*⁺ is the proton source for CO₂-reduction no or almost no *OH*⁻is generated. Accordingly, the carbonate formation process may be at least almost fully avoided. The effect increases with decreasing pH: Alkaline conditions in the vicinity of the cathode (local alkaline conditions) may occur due to the local consumption of protons during CO₂ conversion, but these local alkaline conditions can be mitigated by increasing the propagation of protons to the proton-consumption zone in the vicinity of the cathode. An increase in the proton concentration gradient from the rest of the electrolyte to the proton-consumption zone, i.e., a decrease of the pH in the rest of the electrolyte increases the diffusion rate of the protons towards the consumption zone and hence results in a decrease of the alkaline zone for a given current density. A preferred acid that may be added and/or be present in the cathode chamber may be methane sulfonic acid, as it lowers the pH, is essentially not oxidizing and contributes to an increased CO₂-solubility in the chamber.

The alkali ion concentration *cₐₗₖₐₗᵢ* of the electrolyte in which the CO₂ is dissolved is preferably at or below 0.5mol/liter. In a preferred example the alkali concentration *cₐₗₖₐₗᵢ* is negligible (essentially zero,). More generally, *cₐₗₖₐₗᵢ* ≤ *cₘₐₓ,* wherein *cₘₐₓ mol*/*liter* ∈ {0.5, 0.49, 0.475, 0.45, 0.4, 0.3, 0.2, 0.1, 0.01, 0.001, 0}.

The electrolytic reduction may preferably take place in an electrolytic cell having at least a first chamber and a second chamber. The two chambers are preferably separated by a proton permeable membrane. A cathode may be located in the cathode chamber, which hence may as well be referred to as *cathode chamber.* The protonic electrolyte with CO₂ being dissolved may be filled and/or provided in the cathode chamber, preferably at least to a level being above the lower end of the cathode. Preferred examples of the protonic electrolyte are carboxylic acid and methane sulfonic acid. Thereby the solubility of CO₂ can be raised by factor of 5 compared to pure water. Hence, the activity of CO₂ at the cathode.

In a preferred example, the temperature of the protonic electrolyte is lowered below the critical temperature of CO₂ (31.0°C) to thereby obtain liquified CO₂ and acid-water.

An anode may be located in the second chamber, as well referred to as *"anode chamber".* Water and/or another proton donor may be filled into the anode chamber, again preferably at least to a level being above the lower end of the anode. It comes without saying that the electrolytic cell may be an electrochemical flow cell. In this case, the cathode chamber and the anode chamber may each have at least one inlet and at least one outlet. At the anode the water and/or another proton donor are/is decomposed into O₂ and H⁺ by electrooxidation:

2*H*₂*O* → *O*₂ + 4*H*⁺ *+* 4*e*⁻ *(eq 9)*

For example, the cathode being used in the reducing step may preferably comprise or consist of at least one of Ag, Au, Cd, Mn, In, Sn, Hg, Tl, Bi, Pb, Cu and/or doped graphene. Of course, any composite catalyst comprising at least one of these materials may be used as well. The corresponding method step may be summarized as reducing CO₂ at an Ag, Au, Cd, Mn, In, Sn, Hg, Tl, Bi, Pb, Cu and/or doped graphene comprising cathode. These cathode materials are catalysts for the formation of carboxylic acids (and/or CO), in particular of formic acid and/or acetic acid, while showing little selectivity for the competing H₂-evolution (see *(eq* 5), "HER"). In case graphene is used, it is preferred to use N-doped graphene.

Preferably, the temperature of the protonic electrolyte is set to a value *θ°C* which is above the freezing point of the protonic electrolyte. For example, θ∈{-30, -20, -10, 0, 10, 20, 30, 35, 40, 45, 50, 55, 60, 65, 70}. An upper limit is provided by the boiling temperature of the electrolyte at the given pressure. A preferred range of *θ* is about 40 to 80, i.e. 40°C ≤ *θ°C* ≤ 80°C, particularly preferred is 50°C ≤ *θ°C* ≤ 60C. In this temperature range, electrochemically splitting of *CO*₂ to carboxylic acid and *O*₂ is enthalpy-wise preferred over the competitive hydrogen evolution reaction (HER / *(eq* 5)). It is believed to be explained by the large activity of *CO*₂ in the protonic electrolyte and the lower reaction enthalpy of CO₂ and H₂O to carboxylic acids than to hydrogen (formic acid: +254.kJ/mol vs H₂:- 285kJ/mol). Further, as already explained above, the choice of the cathode material may contribute to suppression of the competitive hydrogen evolution reaction. Cathode materials like for example Sn, Pb and Hg (while not excluding the other above mentioned example cathode materials) show a very low selectivity for HER, while showing high selectivity for carboxylic acids, in particular for formic acid.

The optimum temperature relates (i.a.) to the activity (partial pressure) of the CO₂ in the cathode chamber and the ionic conductivity of the optional membrane separating the cathode and the anode chambers and may be selected as required. The pressure in the electrolytic cell may be approximately ambient pressure (plus the unavoidable hydrostatic pressure) or an increased pressure, but the pressure may as well be reduced compared to standard conditions (commonly "STP": 273.15 K, 1.000hPa).

Preferably, the method may further comprise withdrawing at least a portion of the first and second carboxylic acid from the electrolytic cell, e.g., via a first and second carboxylic acid. This step allows to maintain the concentration of the dissolved CO₂ in the electrolyte high, while at the same time withdrawing the second carboxylic acid from the electrolytic cell as a product or as an intermediate product. This intermediate product chemically binds the carbon of the CO₂ which was released in the calcination reaction and/or a by burning carbon-based fuel as explained above. These intermediate products are valuable chemicals having numerous applications for example in the food and/or chemical industry and can be considered as a secondary product of the cement clinker process and/or the cement clinker line. As long as these secondary products are not subjected to combustion, the carbon of the CO₂ being released in the cement clinker process remains bound and does not contribute to the corresponding cement clinker line's CO₂-emission. At least a portion of the withdrawn carboxylic acid can be used in the dissolving step. The same effect -dissolving CO₂ in an electrolytically generated acid - can be obtained by providing a flow of CO₂ into the cathode chamber of the electrolytic cell. In other words, the CO₂ may be dissolved directly in the cathode chamber. Herein, we do not distinguish between these two possibilities as in any case a CO₂ molecule is first dissolved and subsequently reduced at the cathode. The vessel in which dissolving CO₂ takes places is in principle irrelevant.

A carboxylic acid is reacted with *CaCO*₃ comprised in the raw meal, thereby converting at least as portion of the raw meal into an intermediate raw meal comprising at least calcium carboxylate. The carboxylic acid may be for example at least a second fraction of the withdrawn carboxylic acid, but it may as well be provided by a different source. Carboxylic acids, in particular those recited herein, are commercially available. The optional reacting is independent from any of the beforementioned steps. This reacting is preferably a part of the converting step. As will be apparent from the provided context, it is advantageous to combine it as suggested herein.

It is noted that the term *"second fraction"* does not imply that a first fraction is used in the dissolving step, although it is preferred. The terms *first fraction* and *second fraction* are used only to linguistically distinguish between the two preferred examples and to imply that combining both examples is a particularly preferred example but not required.

In other words, the method may comprises the step of reacting the raw meal with a carboxylic acid (RHOOH) -regardless of its origin-, thereby producing at least Ca(ROO)₂, wherein the symbol "R" represents an organic molecule. For example, the carboxylic acid may be formic acid, being as well referred to as *methanoic acid,* and having the chemical formular HCO₂H. Reacting the raw meal with formic acid provides calcium formate (Ca(HCOO)₂). The exothermal chemical reaction reads

*CaCO*₃ *+* 2*HCOOH* → *Ca*(*HCOO*)₂ *+ H*₂*O + CO*₂ *+ ΔH* (eq 10)

Using other carboxylic acids is possible as well and the equation reads:

*CaCO*₃ *+ 2RCOOH* → Ca(RCOO)₂ + *H*₂*O + CO*₂ *+* Δ*H* (eq 11)

In practice, one simply has to mix the raw meal with a carboxylic acid (RCOOH) and/or sulfonic acid (RSO₂OH) in a first reactor to obtain the Ca-salt (calcium carboxylate, Ca(RCOO)₂) of the respective carboxylic acid. The CO₂ enters the gas phase and can be easily separated from the calcium formate (eq 10) and/or or more generally calcium carboxylate (eq 11) being solids. The raw meal has been converted, but not yet to calcined raw meal but into another intermediate product, we will refer to as intermediate raw meal. The intermediate raw meal may thus comprise one or more calcium carboxylate(s). The amount of CaCO₃ in the intermediate raw meal is significantly reduced, compared to the initial raw meal. Preferably, the CaCO₃ -content of the intermediate raw meal is at least almost zero (within one of 25%, 10%, 7.5%, 5%, 2.5% or within 1% of the content in the initial raw meal). The intermediate raw meal hence comprises or consists of calcium carboxylate, for example calcium formate.

The water (*H*₂*O*) on the right hand sides of (eq 10) and/or (eq 11) may be bound to the solid as water of crystallization, provided the temperature in the corresponding reaction vessel (first reactor) is below the boiling point of water for the prevailing pressure. Preferably, temperatures *T*_{*eq*10} and/or *T*_{*eq*11} during reaction (eq 10) and/or (eq 11), respectively are above the boiling point of water. These temperatures are not critical, but of course should be below the decomposition temperature of the carboxylate, in the example of providing calcium formate, about 200°C ± 25°C have shown to be particularly favorable (175°C ≤ *T*_{*eq*2} ≤ *225°C).* In this example, the water is gaseous and is preferably withdrawn, i.e., separated from the calcium carboxylate. More generally, a reasonable range for temperatures *T*_{*eq*2} and *T*_{*eq*3} is between -20° and 250°C, preferably between 100°C and 225°C, i.e. -20°C ≤ *T*_{*eq*₂} ≤ 250°*C* and -20°C ≤ *T*_{*eq*₃} ≤ 250°C, preferably 100°*C* ≤ *T*_{*eq*₂} ≤ 225°*C* and 100°*C* ≤ *T*_{*eq*₃} ≤ 225°*C*. The CO₂ being released during the reaction (eq 10) and/or (eq 11) is preferably withdrawn from the calcium carboxylate ad hence from the intermediate raw meal. The CO₂ and H₂O on the product sides of (eq 10) and/or (eq 11) can be withdrawn as a gas mixture from the first reactor. Subsequently, the CO₂ and the H₂O may be separated easily by condensing the H₂O. The thereby released thermal energy can be used as process heat. The CO₂ may be subjected to electrolytic reduction as set out above.

Subsequently, the intermediate raw meal comprising the calcium carboxylate is heated to decompose the calcium carboxylate. During the heating process, first the water of crystallization is released between 110°C and 120°C. Releasing water of crystallization is of course optional. It can be omitted, e.g., if formation of the calcium carboxylate took place at temperatures above the boiling temperature of water. Preferably, this water of crystallization or potential residual gaseous water is withdrawn from the intermediate raw meal obtained by the reacting step (i.e. the such treated raw meal, which is, e.g., the calcium carboxylate and/or calcium sulfonate comprising raw meal). Further heating leads to a decomposition of the calcium carboxylate Ca(RCOO)₂, to thereby obtain calcium oxide (CaO). In the example of the calcium carboxilate Ca(RCOO)₂ being calcium formate Ca(HCOO)₂, the corresponding reactions of calcium formate decomposition read:

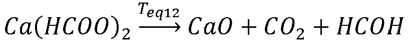

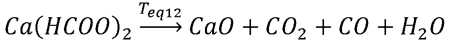

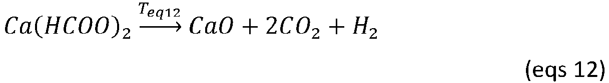

In the general case of calcium carboxylate it reads:

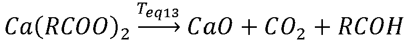

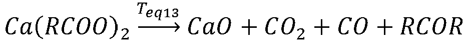

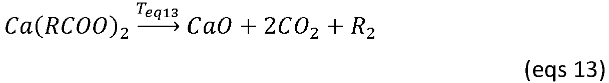

These steps take place in a so called first heater, being explained below in more detail. During the heating process being described by (eqs 12) and/or (eqs 13), gaseous side products, in particular CO₂ and CO are withdrawn from the process, and hence from the calcined raw meal comprising at least CaO, to thereby reduce, if not fully avoid unintended re-carbonation of the CaO to CaCO₃. Further, the above-described optional removal of gaseous H₂O reduces the possibility for the formation of CO₂, CO and H₂. The amount of these side products may hence be kept small, and the main products are CaO and the aldehyde *H*₂*CO* (formaldehyde) or more generally *RCOH* and RCOR (ketone).

The required decomposition temperature *T*_{*eq*12}, *T*_{eq13}depends on the organic rest R. In the example of (eqs 12), the rest R is the formate having a decomposition temperature well above 400°C (Fletcher reports decomposition of Formaldehyde at 569°C, Fletcher C. J. M. 1934, The thermal decomposition of formaldehyde Proc. R. Soc. Lond. A 146: 357-362 http://doi.org/10.1098/rspa.1934.0160). Calcium formate decomposition starts at approximately 400°C, hence it is favorable to select *T*_{*eq*2} to be at or above 380°C, but well below the sintering temperature of the raw meal and the formate's decomposition temperature. Heating to the sintering temperature of 1350°C to 1550°C would provide cement clinker and is thus possible, as cement clinker is intended final product, but the aldehyde would be either burnt or pyrolyzed, depending on the process conditions. Instead, the aldehyde obtained by the reactions (eqs 12) and/or (eqs 13) is withdrawn prior to sintering the raw meal. The such obtained aldehyde(s) can be used as valuable starting materials in the chemical industry, e.g., to manufacture polymers. These aldehydes essentially bind the carbon, which otherwise would have been emitted as CO₂ and at the same time are a secondary product of the cement clinker line.

It is noted that the literature on thermal decomposition of calcium carboxylates generally reports a decomposition of calcium carboxylates to CaCO₃ (see e.g. A. Valor et al. Thermal decomposition of the calcium salts of several carboxylic acids; Thermochimica Acta 389 (2002), p. 133-130; https://doi.org/10.1016/S0040-6031(02)00010-2). However, by removing the gaseous components of the decomposition reaction (being described above), the formation of the CaCO₃ can be almost fully avoided. Another aspect is the presence of H₂O which favors the decomposition of the Ca carboxylates to Ca hydroxide (Ca(OH)₂), which can be dehydrated to CaO. Further, the presence of acidic oxides (like *SiO*₂*,Al*₂*O*₃, ...), which are usually present in the raw meal of cement clinker lines are believed to suppress recarbonization of CaO to CaCO₃. In other words the method step of converting the Ca-salt obtained in the reacting step, into calcined raw meal by thermally decomposing the obtained Ca(RCOO)₂ and/or Ca(RSO₂O)₂ to thereby obtain at least CaO, CO₂ and RCOH and/or RCOR, respectively, may preferably take place in the presence of acidic oxides like for example *SiO*₂,*Al*₂*O*₃, *etc.*

In any of the above explained variants being summarized by (eqs 12) and/or (eqs 13), the calcium carbonate initially provided by the limestone of the raw meal (see left side of (eq 10) and/or (eq 11)) is converted into calcium oxide and hence calcined raw meal is provided while requiring significantly lower temperatures than in presently used state of the art calciners in which (eq 1) takes place. By replacing (eq 1) by (eq 10) and (eqs 12) and/or by (eq 11) and (eqs 13) the temperature level for obtaining calcined raw meal is reduced by a factor of about $\frac{1}{2}$ (on the Celsius scale). This significantly lower temperature regime reduces installation costs for the heater. Use of an indirect heat exchanger as heater is much easier due to the reduced temperature level. The gases on the right hand side of (eqs 12) and/or (eqs 13) are withdrawn and the CO₂ is separated from the other components by condensing the other components. The CO₂ being produced by the optional converting step (which may as well be referenced to as heating step) is hence electrolytically reduced as suggested above.

The optional method steps as described by (eqs 12) and/or (eqs 13) may be summarized in that the method preferably comprises, e.g., as a part of the converting step, heating the intermediate raw meal at least to the decomposition temperature of the calcium carboxylate comprised therein, thereby obtaining at least calcined raw meal and the corresponding aldehyde and/or ketone. This aldehyde and/or ketone is a new secondary product of the cement clinker process and the corresponding cement clinker line. This secondary product can be used as a raw material or platform chemical, e.g., in the polymer industry.

Accordingly, these secondary products are separated from the calcined raw meal. After the converting step, the such obtained aldehyde(s) are still gaseous, and separation of the aldehydes and the calcined raw meal takes place by any suited dedusting process, herein simply referred to as filtering (see above). The calcined raw meal is subsequently sintered to cement clinker.

The decarbonized raw meal may be sintered in a kiln to cement clinker as is known in the art. Other ingredients may as well be added to the decarbonized raw meal to finalize the composition of the raw meal.

The solid raw meal components as well as the solid intermediate raw meal components as well as the solid calcined raw meal components can be separated easily from the fluid products on the right hand side of the reactions (eqs 12) and/or (eqs 13). In the preferred temperature range of these reactions (eqs 12) and/or (eqs 13) these fluids are gaseous and can be withdrawn by gas solid separation methods like filtration and/or precipitation and/or inertial separation. The fluid components have different condensation temperatures, enabling to subsequently separate the fluid components by distillation. Distillation further enables to recuperate condensation heat which then can be used as process heat again.

The method of producing intermediate and/or calcined raw meal as explained above produces CO₂, but the CO₂ can be captured easily and requires no or only little gas cleaning. In particular, it is not diluted by Nitrogen as it is in the standard prior art calcination in a so called calciner. In a preferred example, the CO₂ being produced by at least one of the reactions (eq 10) to (eqs 13) may be electrochemically reduced to thereby produce formic acid and/or another carboxylic acid. At least a portion of the produced formic acid and/or another carboxylic acid may again be used as CO₂-solvant and hence to preferably continuously reduce CO₂ being produced in the cement clinker line, e.g. in a kiln and or during calcination of the raw meal, wherein the calcination may be a obtained according to (eq 1) and/or by the method as summarized by (eq 10) to (eqs 13).

Summarizing the reacting and the converting steps allow to convert the CO₂ being inherently released by the decarbonation of the CaCO₃ into an aldehyde or ketone. These substances allow to store the carbon being released by conversion of the CaCO₃ into CaO for a very long time, e.g., in polymers, and hence environmental effects due to CO₂-emissions of cement clinker manufacturing can be significantly reduced, if not fully avoided.

Above, the different aspects of the invention have been described in detail for the variants starting from formic acid as second carboxylic acid. Other examples for second carboxylic acids in (eq 11) are ethanoic acid (CH₃COOH), propionic acid (CH₃CH₂CO₂H), butanoic acid (CH₃CH₂CH₂CO₂H), pentanoic acid (CH₃(CH₂)₃COOH), hexanoic acid (CH₃(CH₂)₄COOH), heptanoic acid (CH₃(CH₂)₅COOH), octanoic acid (CH₃(CH₂)₆COOH), nonanoic acid (CH₃(CH₂)₇COOH), decanoic acid (CH₃(CH₂)₈COOH), Oxalic acid (HO2C-CO2H), Pyruvic acid (CH₃COCOOH), Glyoxylic acid (OCHCOOH), Glycolic acid (HOCH₂CO₂H). These acids may as well be mixed in any appropriate ratio. The mixture is as well be referred to as second carboxylic acid. The second carboxylic acid may preferably further comprise water. At this place, we used the systematic IUPAC names instead of the preferred IUPAC names of these substances to ease potential translation of the application and the patent into other languages. As apparent, it is preferred if the second and first carboxylic acid(s) are identical or at least overlap.

Examples for the first carboxylic acid, respectively, used in the dissolving step is at least one acid one of the acids comprised in a list being formed by methanoic acid (H₂CO₂), ethanoic acid (CH₃COOH), propionic acid (CH₃CH₂CO₂H), butanoic acid (CH₃CH₂CH₂CO₂H), pentanoic acid (CH₃(CH₂)₃COOH), hexanoic acid (CH₃(CH₂)₄COOH), heptanoic acid (CH₃(CH₂)₅COOH), octanoic acid (CH₃(CH₂)₆COOH), nonanoic acid (CH₃(CH₂)₇COOH), decanoic acid (CH₃(CH₂)₈COOH), Oxalic acid (HO₂C-CO₂H), Pyruvic acid (CH₃COCOOH), Glyoxylic acid (OCHCOOH), Glycolic acid (HOCH₂CO₂H). Optionally, Methane sulfonic acid (CH₃SO₃H) may be comprised in the first carboxylic acid as high boiling additive to adjust the pH, as it is a fully dissociating acid. Further, Methane sulfonic acid has a very high CO₂ solubility. These acids may as well be mixed in any appropriate ratio. The mixture is as well be referred to as first carboxylic acid. The first carboxylic acid may preferably further comprise water.

An apparatus according to the invention is a cement clinker line comprising at least a CO₂-source with a CO₂-outlet, wherein the CO₂-source comprises at least a kiln for sintering calcined raw meal into cement clinker, and optionally a calciner for converting raw meal into calcined raw meal and/or an optional fuel combustion unit. Essentially any CO₂ source in the cement clinker process may be used. The three examples are simply the most prominent examples. The apparatus may further comprise at least a first scrubber, as well referred to as mixer. The first scrubber may have at least a CO₂-inlet, wherein the CO₂-inlet is connected to the CO₂-outlet of the at least one CO₂-source. It is not required that the CO₂-source provides only CO₂. But it is preferred, if the product being provided by the CO₂-source has a CO₂ concentration of *C*_{*CO*₂} of or above *a vol%,* i.e. *C*_{*CO*₂} ≥ *a vol*%, wherein *a* ∈ {5, 10, 15, 20, 30, 40, 50, 60, 70, 80, 90, 95, 100}. In between of the CO₂-source and the CO₂ inlet may be other means to prepare the CO₂ for being dissolved. For example, in case the CO₂ is still hot, it is advantageous to cool it to or below the boiling temperature of the first carboxylic acid and preferably to use the such recuperated energy as process energy. Hence, the CO₂-inlet of the first scrubber may be connected to a cold outlet of a heat exchanger, wherein the hot inlet of the heat exchanger may be connected to a hot CO₂-source.

An acid inlet of the first scrubber may be connected to at least one source of a first carboxylic acid. The first scrubber may further have an acid-dissolved CO₂-outlet, wherein the term *acid-dissolved CO₂-outlet* describes that the corresponding outlet of the first scrubber is configured to provide CO₂ being dissolved in an acidic liquid. As already mentioned above the first scrubber may be integrated into, or be formed by a cathode chamber of an electrolytic cell in this case the acid-dissolved CO₂-outlet of the first scrubber and the acid-dissolved CO₂-inlet of the electrolytic cell are effectively omitted.

The cement clinker line may further comprise the already mentioned electrolytic cell with at least a first fluid chamber with an acid-dissolved CO₂-inlet being connected with the acid-dissolved CO₂-outlet of the first scrubber. In case the first scrubber is integrated into the first fluid chamber, the acid-dissolved CO₂-inlet is simply a CO₂-inlet as explained with respect to the first scrubber. The first fluid chamber may further comprise an acid outlet, configured to withdraw a product obtained by CO₂-reduction from the electrolytic cell. In this sense the outlet may be configured to provide an acid with a reduced CO₂-concentration and may be referred to as *"CO₂-depleted acid outlet".* The first fluid chamber preferably comprises a cathode and may be referred to as cathode chamber. Particularly preferred, are the acid-dissolved CO₂-inlet and the acid outlet at opposite sides of the cathode. This location of the acid-dissolved CO₂-inlet and the acid outlet enables a flow of the electrolyte comprising the dissolved CO₂ from the *acid-dissolved CO₂-inlet* to the cathode, reduction of the CO₂ at the cathode and a subsequent flow of the product obtained by the reduction to the acid outlet. The term at opposite sides of the cathode shall be considered to reference to the flow direction of the fluid in the vicinity of the cathode in response to pressure gradient from the *acid-dissolved CO2-inlet* to the *acid outlet.*

The electrolytic cell may preferably comprise a second fluid chamber. The first and the second fluid chambers are preferably separated by a proton-permeable membrane. The second fluid chamber may comprise an anode (*anode chamber*). Preferably, the anode chamber, i.e., the second fluid chamber comprises an inlet for a proton donor fluid. An example for such fluid would be simply H₂O, providing O₂ and H⁺ (protons) at the anode (see *(eq* 9)). Other fluids providing protons may be used as well. The protons may pass the membrane and react at the cathode with the reduced CO₂.

The apparatus, i.e., the cement clinker line, may hence provide the second carboxylic acid as an intermediate product at the acid outlet. Particularly preferred, are the first and the second carboxylic acids identical, which vastly simplifies the process. The second carboxylic acid can be used in the chemical industry or for any other suited purpose, e.g., as a deicing fluid, animal nutrition, feed preservation, and for leather and textile manufacture, to name only a few possibilities.

The optional calciner may comprise at least a first reactor and/or a first heater, wherein the first reactor further comprises at least a first reactor volume and a CO₂-depleted acid inlet being connected to the CO₂-depleted acid outlet of the electrolytic cell. The CO₂-depleted acid inlet is of course in fluid communication with the first reactor volume, thereby enabling a flow of the CO₂-depleted acid from the CO₂-depleted acid inlet to the first reactor volume. A raw meal inlet may as well be in fluid communication with the first reactor volume. Accordingly, the first reactor volume may be configured to bring the CO₂-depleted acid in contact with the raw meal.

The first reactor has an intermediate raw meal outlet, wherein the intermediate raw meal outlet may preferably, be in fluid communication with the first reactor volume and/or have a conveyor for conveying the intermediate raw meal to the heater's intermediate raw meal inlet. In this sense the intermediate raw meal outlet is preferably connected by a connection to an intermediate raw meal outlet of the first heater. Typical examples for these intermediate raw meal conveying connections are chutes, screw conveyors, belt conveyors, drag chain conveyors, lorries, etc.

The first heater further comprises a heater volume, which heater volume may be in fluid communication with the intermediate raw meal inlet and/or a calcined raw meal outlet. The heater volume hence enables to heat the intermediate raw meal as explained above. Heating may be obtained by indirect or direct heat exchange with a heat carrier medium and/or by electrical heating. The product of this heating process is an aldehyde and/or a ketone and CO₂ as summarized in (eqs 12) and/or (eqs 13). The first heater may preferably have a CO₂ outlet being connected to the CO₂ inlet of the first scrubber. The connection may of course comprise a CO₂-reservoir and/or a heat exchanger to recuperate process heat, a dedusting apparatus (a filter) or the like, but in any case allows to provide a flow of CO₂ being released in the heating chamber to the CO₂ inlet of the first scrubber.

The cement clinker line further comprises a kiln, wherein the kiln has at least a calcined raw meal inlet and a clinker outlet. The calcined raw meal inlet is connected to the heater's calcined raw meal outlet.

Summarizing, the apparatus is a cement clinker line and comprises at least a kiln for sintering at least calcined raw meal to cement clinker. The cement clinker line further comprises at least the first reactor. The first reactor has at least a first inlet. The first inlet is connected to a raw meal source and/or raw meal reservoir, e.g., via a preheater tower. The first inlet of the reactor may thus as well be referred to herein as raw meal inlet. The first reactor further has a second inlet. The second inlet is connected to a source and/or a reservoir of a carboxylic acid. In particular, the carboxylic acid may comprise at least one of the carboxylic acids and/or sulfonic acids listed above and/or in the claims. This second inlet may be referred to as the first reactor's acid inlet. The first reactor in addition has at least a first outlet. The raw meal inlet, the second inlet and the first outlet are preferably in fluid communication with a first reactor volume. The first reactor hence enables to execute the reacting step, thereby converting the raw meal to an intermediate raw meal. The reactor may have multiple outlets, e.g. to separately withdraw gaseous and solid products of at least one of reactions (eq 10) and/or (eq 11) from the reactor. The first outlet of the first reactor may thus be considered as source for intermediate raw meal.

This intermediate raw meal source is connected at least indirectly, e.g., via conveying means, with a cold inlet of the first heater. The cold inlet is thus an intermediate raw meal inlet. The first heater may be a heat exchanger and/or an electrical heater. The first heater has a heater volume, and the intermediate raw meal inlet may preferably be in fluid communication with the heater volume. Preferably, the heater volume is as well in fluid communication with a (hot) calcined raw meal outlet. The calcined raw meal outlet is connected to a calcined raw meal inlet of a kiln. The heater may further comprise a gaseous fluid outlet, as well being in fluid communication with the heater volume. The heater hence enables to convert the intermediate raw meal provided from the first reactor to the heater volume in the heater volume to calcined raw meal. The calcined raw meal is provided to the kiln. Gaseous products of reactions (eqs 12) and/or (eqs 13) can be withdrawn from the heater. The heater volume can be heated electrically. Alternatively, or in addition, the heater may comprise a hot inlet and a cold outlet being connected by a conduit, wherein the conduit is in thermal contact with the heater volume. For example, a wall of the conduit may delimit or define the heater volume. The heater may as well comprise a fireplace.

In a preferred embodiment the cement clinker line comprises a filter having at least a first filter inlet, a first filter outlet and a second filter outlet, wherein the filter is configured to provide solid matter to the first filter outlet and fluid matter to the second filter outlet. The first reactor outlet may be connected to the filter inlet. The first filter outlet may be connected to the cold inlet of the heater.

As already sketched above, the first heater may be a heat exchanger. The first filter outlet may be connected to the cold inlet, i.e., to the intermediate raw meal inlet of the heater. A hot outlet of the heater, i.e., the calcined raw meal outlet may be connected to an inlet of a second filter. The second filter may be configured to provide solid matter to the first second filter outlet, i.e., to the so called calcined raw meal filter outlet, and fluid matter to the second second filter outlet. The first second filter outlet may preferably be connected to the calcined raw meal inlet of the kiln.

Unless explicitly stated all reactions can be performed at norm pressure *pₙ* = 1000*hPa*. Pressure variations can be accepted in very vide range, for example a pressure deviation Δ*pₙ =* ±150*hPa* is considered uncritical.

Herein *filter, filtration* and *to filter* describes any means, method or steps, respectively being suited to separate a solid from fluid components of mixture, regardless whether the separation is a filtration (i.e. based on a filter mesh allowing only fluid components to pass) and/or a precipitation being based on other principles and/or inertial separation. Examples for precipitators are electrostatic precipitators and cyclones are an example for inertial separators or, when considering batch processing, centrifuges. Similarly, the term filter shall encompass any means for separating a solid from a fluid component of mixture, e.g. filter mesh based filters like paper filters, bag filters and the like as well as precipitators, cyclones, centrifuges, etc. "Filter" is thus as well synonymous to gas-solid separation means which term may be shortened to gas separator.

In the cement clinker industry, the term raw meal usually describes a ground mining product comprising limestone as calcium (Ca) source and an aluminosilicate source like clay. This typical raw meal may as well be the starting product being subjected to the reaction step as explained above. As apparent from the above, this disclosure focusses on converting the limestone-based component CaCO₃ of the raw meal to CaO. The clay-based component of the raw meal may be dragged through the process. Alternatively, only the limestone-based component may be treated as described herein to obtain calcined raw meal and the clay-based component(s) of the raw meal may be added at any stage prior to the sintering step. The term raw meal is thus to be understood as matter, being preferably ground, milled, or in any other way comminuted to a meal like consistency. This consistency is not required but preferred, as it increases the surface of the matter. The raw meal may comprise least limestone (as an example for a CaCO₃-source) and optionally clay and/or other components. Except for the CaCO₃ source in the raw meal, all other components being required to sinter clinker may be added at a later stage of the process, e.g., after or prior to the optional converting step. It does not matter at which stage of the process the non-limestone-based components are added to the raw meal, provided they are added prior to sintering the raw meal.

Herein, we used the verb *to connect* and the corresponding noun *connection* to describe that starting material, an intermediate product or a final product can be withdrawn from a source's outlet and in any way provided to an inlet of another part of the apparatus by means of the connection. A connection for conveying fluids like gases and liquids can be or comprise a pipe, a tube or the like as well as a pump, ventilators, valves or the like to control the flow. Solid matter can be conveyed by connections like chutes, slides, belt conveyors, rollers, lorries. Solid matter can as well be conveyed as dispersed matter in gases and or liquids, in this case pipes, ducts or the like can be used as connections. The terms *to connect* and the corresponding noun *connection* are not to be interpreted in the meaning of an electrical connection or a mechanical coupling, although the intended material transport enabling connection may imply such connections. In case an electrical connection is meant, it will be explicitly stated. Similarly, in case a mechanical connection for transmitting a force and/or or a torque (e.g., some sort of coupling) is intended it will be expressly stated this.

Only to avoid unnecessary discussions it is noted that reducing dissolved CO₂ at a cathode implies contacting the CO₂-comprising solvent with an electrically conducting (preferably solid) matter, wherein the conducting matter is contacted via an electrical conductor (i.e., electrically connected) to an electron source, e.g., with the corresponding pole of voltage source or a current source. Further, said reducing implies a corresponding oxidation at an anode (see *(eq* 9)). For example, another conducting (preferably solid) matter may be electrically contacted with a cation donor like, e.g., H₂O, the latter being an example of a proton donor, i.e. an H⁺-donor. The another conducting matter is electrically contacted via an electrical conductor to a hole source of a voltage source or current source. Electrically contacting the solvent and the cation donor with the cathode or anode, respectively, can be obtained by dipping at least a portion of the cathode or anode, respectively, in the solvent or cation donor. Herein, we apply the usual convention, that a cation has positive charge and is attracted by coulomb forces by the cathode. Negatively charged molecules or atoms are referred to as anions and are attracted by coulomb forces by the anode. A cation permeable membrane may separate the CO₂-solvent and the cation donor fluid. An electrolytic cell comprises at least a chamber for holding a liquid and an anode and a cathode extending into or delimiting the chamber. Preferred examples comprise a at least a cathode chamber with a cathode, the so-called cathode chamber, and a anode chamber with an anode, the so called anode chamber. The cathode chamber and the anode chamber are preferably separated by a semi-permeable membrane, e.g., by a proton-permeable membrane. Each chamber may have an inlet and/or an outlet for refilling and withdrawing fluids from the chambers. For a more detailed review on electrolysis, we may reference to corresponding textbooks as known to the person of ordinary skill in the art.

Only to avoid misunderstandings it is noted that a list of alternatives *"Aᵢ, A₂, A₃,* ... , *A*_{*n*-1} and/or *Aₙ"* shall be understood as *"A*₁ and/or *A*₂ and/or *A*₃and/or ... and/or *A*_{*n*-1} and/or *Aₙ"* being equivalent to at least one of the set {*A*₁, *A*₂, ... , *Aₙ*}, wherein *n* is a positive integer.

As normally understood by a person of skill in the art, a fluid can be gaseous or a liquid or a mixture of both phases. A fluid thus distinguishes from solid matter. A powder, although it can flow and be fluidized is considered as solid, because each powder grain is a solid matter.

### Description of Drawings

In the following, the invention will be described by way of example, without limitation of the general inventive concept, on examples of embodiment with reference to the drawings.
Figure 1 shows a diagrammatic representation of a method for manufacturing calcined raw meal.
Figure 2 shows a cement clinker line.

The embodiment of a method 100 for providing calcined raw meal 103 which may be used in a subsequent optional step to manufacture cement clinker comprises step 110 of reacting a raw meal 101, comprising at least limestone or another CaCO₃-source, with a carboxylic acid (ROOH). The carboxylic acid (ROOH) is represented by reference numeral 108.

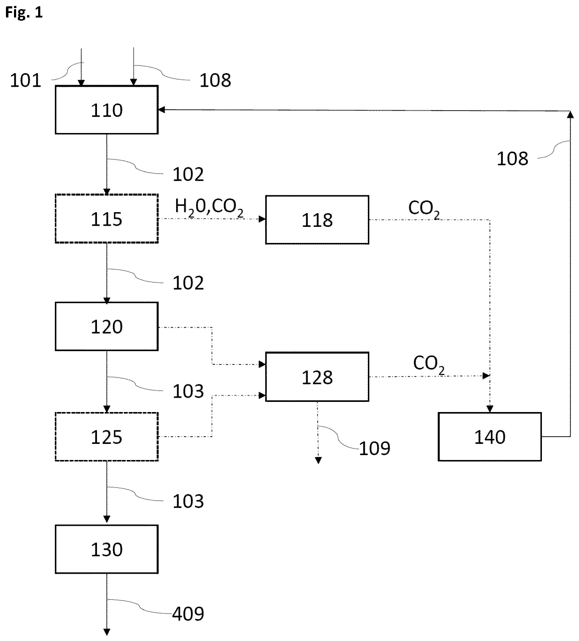

In this step 110 at least Ca(RCOO)₂ is produced (being symbolized by reference numeral 102) wherein the symbol "R" represents an organic group, as well referred to as organic rest (see (eq 10) and/or (eq 11)). In other words, reference numeral 102 represents the intermediate raw meal. Further H₂O and CO₂ are produced in step 110. The reaction(s) may preferably be performed in a temperature range of 175° to 225°C. In this temperature range water of crystallization remains in the gaseous phase. At least approximately normal pressure (1000*hPa* ± 100*hPa*) is particularly suited, but other pressures may be used as well. Preferably, the such obtained intermediate product is subsequently separated (e.g. filtered) into its solid components 102, i.e. the intermediate raw meal, and its fluid components H₂O and CO₂. This optional separation (filtering) step is symbolized by box 115. The such obtained intermediate raw meal 102 is subsequently heated in step 120 to thereby decompose the calcium carboxylate and/or calcium methane sulfonate of the intermediate raw meal 102 into CaO being at least a component of the such obtained calcined raw meal 103. Further optional products are an aldehyde and/or ketones which are separated as indicated by dashed lines to box 128. The formation of CaO can be enhanced if the gaseous products of the decomposition are withdrawn, preferably during the converting step (see dashed lines to box 128). Alternatively, and/or in addition, the step of withdrawing the gaseous products can be performed after the converting step, this sequence is depicted in FIG. 1 by box 125. The (preferably such obtained) calcined raw meal 103 may optionally be subjected to sintering being indicated by box 130. The gaseous products of the converting step 110 are separated by condensation, thereby removing at least the aldehyde and/or the ketone from the mixture (see box 128). The remaining mixture may be cooled down below the boiling point of water to condense water in the mixture. The remaining mixture comprises CO₂, CO and H₂ and may be used as syngas. Alternatively, it may be burnt to essentially produce CO₂ and H₂O, e.g., in the kiln or as energy source for the first heater or to provide process energy for any other subprocess in a cement clinker plant.

The method may comprise producing CO₂ in multiple process steps. At least a portion of the CO₂ released by at least one of these process steps may be collected and electrochemically reduced to a carboxylic acid (108) as symbolized by optional box 140. At least a portion of the (preferably such obtained) carboxylic acid may be used in the reacting step 110 to convert the raw meal (101) into the intermediate raw meal (102).

It should be noted that any of these steps can be performed independently from each other as the as long as the required starting materials are sourced. However, at least two of the steps described above are combined. The sequence of some of the steps may be altered, but the depicted sequence is preferred. In modern plants, one would favor a continuous process over a batch process, i.e. the steps may be performed at the same time, while the product of an earlier step is preferably continuously provided as starting material to a subsequent step.

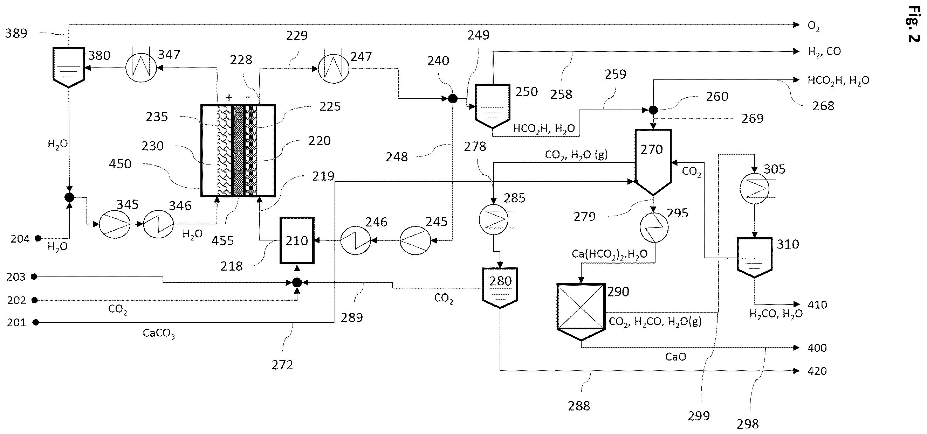

FIG. 2 shows a cement clinker line 200 or more precisely a part thereof. For simplicity, well known optional and as well as non-optional components of these cement clinker lines have been omitted, like for example, the raw-meal mill, the raw-meal preheater, the kiln 400, the clinker cooler and the exhaust stack, a power plant, to name only a few.

For simplicity any material stream herein is represented by a connection (an arrow) and said connections represent as well conveying means enabling to provide the stream from the source of the stream to the drain of the stream. Connections for fluids are typically conduits, like pipes. Connections for solid matter may be conveying belts, screw conveyers, chutes, but as well conduits for conveying fluidized or dispersed solid matter. The tips of the arrows indicate the conveying direction, i.e., the tip of an arrow points to the drain of the stream being represented by the respective arrow.

CO₂ being produced in the cement clinker line and/or being provided from an external process (e.g., from a power plant burning carbon-based fuels) may be provided as a CO₂ stream from such a CO₂ source 201 and may be dissolved in a first acid and/or water in a mixer 210, which may be considered as a first scrubber 210. The first acid may be at least initially provided from an external source 202 as a starting material and/or may be produced by the cement clinker line 200 as explained herein. Preferred examples of such first acids are carboxylic acids like formic acid, acetic acid or the like as listed in the section *Summary of the invention* and the appended claims. Alternatively, or in addition, the first acid may consist of or comprise at least one sulfonic acid, like e.g. methane sulfonic acid. Other examples are again provided in the section *Summary of the invention.*

The mixer 210 has an outlet 218. The outlet 218 of the mixer 210 may provide a stream 219 to a dissolved CO₂-inlet 221 of a cathode chamber 220 of an electrolytic cell. The optional stream 219 is represented by an arrow which as well represents the corresponding connection (i.e. the conveying means). Below, we will not again distinguish between streams and connections, as one implies the other. Both terms represent two aspects of the same technical teaching.

In the optional cathode chamber, the dissolved CO₂ flow is contacted with an optional cathode 225. Preferably, the dissolved CO₂ flows along the optional cathode 225 or at least along a section of the cathode 225. The cathode 225 may be of or comprise at least one of In, Sn, Hg, Bi, Pb, Cu and/or doped graphene. N-doped graphed is a preferred doped graphene. At the cathode 225, the dissolved CO₂ is reduced to a second acid. The second acid being produced by the reduction depends on the choice of the cathode 225. Preferably the cathode 225 is a catalyst for reduction of the CO₂ to a carboxylic acid, preferably the same carboxylic or sulfonic acid as the first acid. In other words, the first acid and the second acid are preferably identical.

The acid-dissolved CO₂ may thus be depleted from the first acid, while flowing over the cathode. The flow thus converts into a mixture of the first and the second acid, which may leave the cathode via an optional cathode chamber outlet 228. This mixture can as well be referred to as CO₂-depleted (first) acid. Of course, if the first and second acids are selected to be identical, one cannot chemically distinguish which molecule was already provided to the mixer 210 and which molecule has been produced by reducing dissolved CO₂ (physical methods, however allow to: for example mass spectroscopy could distinguish the molecules by using different carbon isotopes for the different starting materials provided to the mixer).

The optional reduction in the cathode chamber (220) preferably takes place at slightly elevated temperatures to thermodynamically favor the CO₂ reduction to the second acid over the generation of H₂ (HER, as explained above). Slightly elevated means in this context elevated by a positive value θ° above standard conditions (commonly "STP": 273.15 K, 1.000hPa), preferably, θ∈{30, 35, 40, 45, 50, 55, 60, 65, 70}. An upper limit is provided by the boiling temperature of the electrolyte (i.e., the first acid) at the given pressure. The lower limit is given by the freezing temperature of the electrolyte. A preferred range of θ is about 40 to 80, i.e., 40°≤θ°≤80°, particularly preferred is 50°≤θ°≤60. This temperature range can be obtained by prewarming the first acid upstream of the cathode chamber 220, e.g., upstream of the mixer 219 as symbolized by a heater 246. The heater 246 may be or comprise a heat exchanger being provided with heat being recuperated at another part of the cement clinker line 200. An example of such heat recuperation is the use of heat being withdrawn from clinker cooler exhaust gas and/or the heat being removed from the stream 229 leaving the cathode chamber outlet 229 by another optional heat exchanger 247 for cooling the stream 229. Heater 246 and heat exchanger 247 (cooler 247) may as well be combined into an indirect heat transfer heat exchanger, preferably in a counterflow indirect heat transfer type heat exchanger.

The optional electrolytic cell 450 may further comprise an optional anode chamber 230. The optional anode chamber has an anode 233 and may be separated from the cathode chamber by an optional cation (e.g. proton) permeable membrane 455. The anode chamber serves as cation (proton) source for the reduction of the dissolved CO₂ at the cathode 225 to the second acid in the cathode chamber 220 (see *(eq 2)* and *(eq 3)).* Due to the electric potential between the anode and the cathode, H₂O molecules are split into 2H⁺ and O²⁻. Two O²⁻ anion are oxidized at the anode into O₂ (see *(eq* 9)). The O₂ is another secondary product of the cement clinker line and leaves the anode chamber as a stream 239, which may as well comprise H₂O. The stream 239 may be cooled using a heat exchanger 347 (cooler 347) and separated from the stream in a gas-liquid separator 380. The such obtained H₂O may be cycled and provided to the anode chamber 230, preferably, after being heated by heater 346. Heater 346 may as well be a part of a heat exchanger being sourced by recuperated process heat. The O₂ stream leaving the gas-liquid separator is indicated by reference numeral 389. The O₂ produced at the anode may be used, e.g., to replace combustion air in the kiln 400, e.g., to replace at least in part oxygen being provided as primary air to the burner of the kiln 400, to thereby reduce the amount of N₂ in the exhaust gas of the kiln. This reduction thus decreases the total amount of exhaust gas and at the same time increases the CO₂-concentration on the exhaust gas. The exhaust gas may hence be used as CO₂-source 202. Of course, it is preferably dedusted and cooled prior to providing it to the mixer 202. Other purification steps may as well be advantageous.

As already apparent, the mixture of the first and second acids being withdrawn from the cathode chamber outlet 228 is symbolized by a flow 229. Only for simplicity, we assume the first acid and the second acid to be to be identical, to be e.g., both formic acid or both acetic acid). In case they would be different substances one would have to separate the first and second acid, e.g., by distillation or other means. This optional separation is symbolized by a branching point 240. From the branching point, the first acid may flow back as optional stream 248 to the optional mixer 210. An optional pump may be placed in the stream 248 as well as an optional heater 246. The optional pump 245 may as well be placed in a different place of cement clinker line.

From the optional branching point 240, the second acid may flow to an optional liquid-gas separator 250 (vulgo "filter") as indicated by flow 249. Unintended side products of the electrolysis like H₂ and CO still being (potentially) in the flow 259 are preferably removed. In case the first and second acids are different, the unintended side products can already be removed at optional branching point 240. The liquid-gas separator's 250 outlet may provide CO and H₂ which are to a certain extend unavoidable side products of the reduction of CO₂ (see *(eq 4)* and *(eq 5)) .* At least these side products may be oxidized in the kiln and/or a gas turbine to CO₂ and H₂O and/or in a burner providing process heat to a reactor and/or used to produce syngas and/or for any other purpose. The heat being released by oxidizing the CO₂ and H₂O may be used, e.g., in the optional heater 246 to reheat the optional stream 248 of the first acid prior to providing it to the optional cathode chamber 220.

The fluid constituent is the optionally intended aqueous second acid, symbolized as optional stream 259, for example a formic acid stream and/or an acetic acid stream. In an embodiment this second acid may be withdrawn fully or in part from the process and used for any other suited purpose as indicated by optional stream 268. In another embodiment, which may be combined with the embodiment described in the previous sentence as represented by optional branching point 260, at least a portion of the second acid may be provided as optional stream 269 to a first reactor 270 and may be reacted therein with raw meal comprising at least CaCO₃ or consisting of CaCO₃.

In this first reactor 270, the calcium (Ca) salt of the second acid may be formed, as well as CO₂ and H₂O. The Ca salt is the main ingredient of the intermediate raw meal, as explained in the section *Summary of the invention.* The reactions taking place in the optional first reactor are essentially those of (eq 10) and/or (eq 11). The corresponding method step is herein referred to as reacting step. The temperature in the first reactor 270 is preferably controlled to be above the boiling point of water, to thereby ensure that the water of crystallization is gaseous and can be separated from the solid. The obtained optional gas stream 278 may comprise essentially CO₂ and H₂O(g) and may be provided to an optional gas separator 280, e.g., via another optional heat exchanger 285. The H₂O may preferably be removed from the optional stream 278 and may be used for other purposes 420 as indicated by optional stream 288. CO₂ can be separated for example by simply condensing the H₂O, although a portion of the CO₂ is likely to be dissolved in the H₂O, depending on the temperature. CO₂ can be withdrawn as gaseous optional stream 289 from the optional gas separator 280 and may be provided to the optional mixer 210. Summarizing, one may say that a portion of the carbon atoms may in an embodiment hence be held in a cycle formed essentially by the optional mixer 201, the optional cathode chamber 220 and the first reactor 270. Another portion of the carbon atoms are removed from the cement clinker line 200 as an aldehyde or ketone: This can be obtained by withdrawing the Ca-salt obtained in the optional first reactor 270 from the optional first reactor 270 (by optional stream 279). Preferably, this stream 279 may be heated as indicated by an optional heater 295 and may be provided to an optional first heater 290. In this optional first heater 290, the Ca-salt is decomposed into at least one of an aldehyde, a ketone, CO₂, H₂O and CaO. The reactions in this first heater 290 can be summarized by (eqs 12) and/or (eqs 13) and the corresponding method step is herein referred to as converting step or as well as heating step.

The CaO being produced in the first heater 290 is the main component of so called calcined raw meal and is provided to a kiln 400 for sintering it with other starting materials (like for example clay) to cement clinker. The other components of the raw meal may be included in the starting material being provided initially by a raw meal/CaCO₃ source 201 to the first reactor 270 and/or added to the stream 288 comprising at least CaO. In the terminology of this application, one may hence say that the raw meal stream 272 being provided to the first reactor 270 comprises at least CaCO₃ and may optionally comprise further constituents. The intermediate raw meal stream 279 provided by the first reactor thus comprises at least the Ca salt of the second acid and the calcined raw meal stream comprises at least CaO.

In the first heater, the reactions as described by (eqs 12) and/or (eqs 13) take place. At the temperatures present in the first heater 290, only the calcined raw meal at least comprising CaO is solid, the other products like CO₂, H₂O, H₂CO or other aldehydes and/or ketones are gaseous and are preferably withdrawn from the first heater 290 as indicated by stream 299. The stream 299 is preferably cooled down below the condensation temperature of the aldehyde and H₂O as symbolized by the optional heat exchanger 305 (cooler 305). The thereby recuperated heat may be used as process heat in the cement clinker line 200. For example, the optional heat exchanger 305, may be a heat source for the optional heater 356 or any other heater. The still gaseous CO₂ may be withdrawn and merged into stream 278 or by some other route be provided to the optional mixer 210. The aldehyde and ketone and the H₂O in the remaining stream 309 may or may not be separated from each other. The aldehyde and/or ketone is an optional but valuable secondary product of the process. The water may be used for example as feed water source 204 of the anode chamber 230.

### List of reference numerals

- 100: method
- 101: raw meal / CaCO₃
- 102: intermediate raw meal
- 103: calcined raw meal
- 108: carboxylic acid (ROOH)
- 110: method step of reacting raw meal 101, (optional)
- 115: method step of separating intermediate raw meal and fluid products like for example CO₂ and H₂O, (optional)
- 120: step of heating intermediate raw meal 102, (optional)
- 125: step of withdrawing the gaseous products, (optional)
- 128: method step of separating calcined raw meal and fluid products like for example CO₂ and an aldehyde, (optional).
- 130: method step of sintering calcined raw meal, (optional)
- 140: method step of electrochemically reducing CO₂, (optional)
- 200: cement clinker line
- 201: CaCO₃ source / raw meal source
- 202: CO₂-source, (optional)
- 203: first acid source, (optional)
- 218: outlet of mixer / first scrubber 210 providing a stream 219, (optional)
- 219: stream of CO₂- being dissolved in water and/or a first acid / conduit
- 219: connecting outlet218 of mixer 210 with dissolved-CO₂ inlet 221 of the cathode chamber 220, (optional)
- 220: cathode chamber of electrolytic cell 450, (optional)
- 221: dissolved CO₂ inlet, (optional)
- 225: cathode, (optional)
- 228: cathode chamber outlet, (optional)
- 229: stream of first and/or second acid, (optional)
- 230: anode chamber of electrolytic cell, (optional)
- 235: anode, (optional)
- 240: (first) branching point, (optional)
- 245: pump, (optional)
- 247: heat exchanger / heater, (optional)
- 248: first acid flow, (optional)
- 249: second acid flow, (optional)
- 250: gas-liquid separator, (optional)
- 258: stream of intended side products, (optional)
- 259: stream of second acid, (optional)
- 260: (second) branching point, optional
- 268: second acid stream, (optional)
- 269: second acid stream, (optional)
- 270: first reactor
- 272: stream of CaCO₃ comprising raw meal to the first reactor 270
- 278: stream of CO₂ and H₂O(g) from the first reactor 270 to first heater 290
- 280: gas separator, (optional)
- 290: first heater
- 298: CaO comprising calcined raw meal stream
- 299: stream of gaseous products
- 295: heater, (optional)
- 346: heater / heat exchanger, (optional)
- 347: cooler / heat exchanger, (optional)
- 380: gas/liquid separator, (optional)
- 400: kiln
- 409: clinker, (optional)
- 420: water drain, (optional)
- 410: secondary product outlet, (optional)
- 450: electrolytic cell, (optional)
- 455: membrane, (optional)

## Claims

1. A method for producing calcined raw meal (102) in a cement clinker line (200) from raw meal (101), wherein the raw meal (101) at least comprises CaCO₃, the method comprising at least:
- reacting the raw meal (101) with a carboxylic acid (RCOOH), thereby producing at least Ca(RCOO)₂, respectively, wherein the symbol "R" represents an organic rest; and
- converting the Ca(RCOO)₂ obtained in the reacting step, into calcined raw meal (103) by thermally decomposing the obtained Ca(RCOO)₂ to thereby obtain at least CaO, CO₂ and RCOH and/or *RCOR,* respectively,
wherein an aldehyde and/or a ketone obtained by thermally decomposing the obtained Ca(RCOO)₂ is withdrawn from the calcined raw meal.

2. The method of claim 1, **characterized in that**
- reacting the raw meal (101) with the carboxylic acid (RCOOH) takes places at a temperature between 100°C and 300°C and/or 150°C and 250°.

3. The method of claim 1 or 2, **characterized in that**
- the converting step (125) comprises heating the Ca(RCOO)₂ to a temperature *T_{con}* ≤ 1000°C, preferably *T_{con}* ≤ 450°C.

4. The method of one of the previous claims, **characterized in that** the method further comprises sintering the calcined raw meal (103) in a cement clinker kiln (400) to cement clinker (409).

5. The method of one of the previous claims, **characterized in that** the CO₂ being produced in the reacting step (115) and/or the converting step (120) and/or the optional sintering step (130) and/or by burning fuel is electrochemically reduced into a carboxylic acid (RCOOH) at the cathode of an electrolytic cell.

6. The method of the previous claim, **characterized in that** the carboxylic acid (RCOOH) obtained by the electrochemical transformation (140) is used as carboxylic acid (RCOOH) in the reacting step (110).

7. The method of one of the previous claims, **characterized in that** the method further comprises
separating the calcined raw meal (106) prior to sintering it from the RCOH and/or RCOR, respectively, and CO₂ being obtained in the converting step (120), thereby obtaining calcined raw meal (103) and a fluid comprising CO₂ and/or at least one of RCOH and RCOR.

8. The method of the previous claim, **characterized in that** it further comprises:
- cooling the fluid obtained in the separating step (125) below the condensation temperature of RCOH and/or RCOR, wherein the temperature remains above the condensation temperature of the CO₂;
- separately withdrawing the liquid RCOH and/or RCOR, respectively and the gaseous CO₂.

9. The method of the previous claim, **characterized in that**:
- an indirect heat exchanger is used to execute the cooling step, thereby transferring heat from the cooled fluid to a heating a heat carrier fluid;
- using the heat being transferred to the heat carrier fluid as process heat in the cement clinker process and/or a power-plant process.

10. The method of one of the previous claims, **characterized in that** the carboxylic acid of claim 1 and/or claim 5 and/or 6 is or comprises at least one of methanoic acid (H₂CO₂), ethanoic acid (CH₃COOH), propionic acid (CH₃CH₂CO₂H), butanoic acid (CH₃CH₂CH₂CO₂H), pentanoic acid (CH₃(CH₂)₃COOH), hexanoic acid (CH₃(CH₂)₄COOH), heptanoic acid (CH₃(CH₂)₅COOH), octanoic acid (CH₃(CH₂)₆COOH), nonanoic acid (CH₃(CH₂)₇COOH), decanoic acid (CH₃(CH₂)₈COOH), Oxalic acid (HO2C-CO2H), Pyruvic acid (CH₃COCOOH), Glyoxylic acid (OCHCOOH), Glycolic acid (HOCH₂CO₂H) and Methane sulfonic acid (CH₃SO₃H).

11. The method of one of the previous claims, **characterized in that** the Ca(RCOO)₂ is dried prior to inducing the decomposition and/or **in that** the reacting step (110) takes place above the boiling temperature of water at the pressure at which the reacting step is performed.

12. A cement clinker line (200), comprising at least
- a kiln (400) for sintering calcined raw meal (103) to cement clinker (409), wherein the kiln has a calcined raw meal inlet and a clinker outlet,
- a first reactor (270) with at least a first inlet, a second inlet, and a first outlet,
- wherein the first inlet is connected to a source and/or a reservoir of raw meal,
- wherein the second inlet is connected to a source and/or a reservoir of a carboxylic acid (203, 228),
- wherein the first outlet is an intermediate raw meal outlet,
- a first heater (290) with
- a heater volume,
- a first outlet, wherein the first outlet of the heater is a calcined raw meal outlet,
- a second outlet, wherein the second outlet of the heater is a gaseous fluid outlet being in fluid communication with the heater volume,
- an intermediate raw meal inlet,
wherein the calcined raw meal inlet of the kiln (400) is connected to the calcined raw meal outlet of the heater (290),
wherein the intermediate raw meal inlet of the heater (290) is connected to the intermediate raw meal outlet of the first reactor (270).

13. A cement clinker line (200) **characterized in that** it is configured to execute the method according to one of claims 1 to 11.

## Patentansprüche

1. Ein Verfahren zur Herstellung von kalziniertem Rohmehl (102) in einer Zementklinker-Produktionslinie (200) aus Rohmehl (101), wobei das Rohmehl (101) mindestens CaCO₃ enthält, das Verfahren mindestens Folgendes aufweisend:
- Reagieren des Rohmehls (101) mit einer Carbonsäure (RCOOH), wodurch mindestens Ca(RCOO)₂ entsteht, bzw. wobei das Symbol "R" einen organischen Rest darstellt; und
- Umwandeln des im Reaktionsschritt erhaltenen Ca(RCOO)₂, zu kalziniertem Rohmehl (103) durch thermisches Zersetzen des erhaltenen Ca(RCOO)₂, um dabei mindestens CaO, CO₂ und RCOH bzw. *RCOR* zu erhalten,
wobei ein durch thermisches Zersetzen des erhaltenen Ca(RCOO)₂ erhaltenes Aldehyd und/oder Keton dem kalzinierten Rohmehl entzogen wird.

2. Das Verfahren gemäß Anspruch 1, **dadurch gekennzeichnet, dass**
- Reagieren des Rohmehls (101) mit der Carbonsäure (RCOOH) bei einer Temperatur zwischen 100°C und 300°C und/oder 150°C und 250°C stattfindet.

3. Das Verfahren gemäß Anspruch 1 oder 2, **dadurch gekennzeichnet, dass**
- der Umwandlungsschritt (125) Erhitzen von Ca(RCOO)₂ auf eine Temperatur *T_{con} ≤* 1000 °C , vorzugsweise *T_{con}* ≤ 450 °C aufweist.

4. Das Verfahren gemäß einem der vorhergehenden Ansprüche, **dadurch gekennzeichnet, dass** das Verfahren weiterhin Sintern des kalzinierten Rohmehls (103) in einem Zementklinkerofen (400) zu Zementklinker (409) aufweist.

5. Das Verfahren gemäß einem der vorhergehenden Ansprüche, **dadurch gekennzeichnet, dass** das im Reaktionsschritt (115) und/oder im Umwandlungsschritt (120) und/oder im optionalen Sinterschritt (130) und/oder durch Verbrennung von Brennstoff erzeugte CO₂ an der Kathode einer Elektrolysezelle elektrochemisch zu einer Carbonsäure (RCOOH) reduziert wird.

6. Das Verfahren gemäß dem vorhergehenden Anspruch, **dadurch gekennzeichnet, dass** die durch elektrochemische Transformation (140) erhaltene Carbonsäure (RCOOH) als Carbonsäure (RCOOH) im Reaktionsschritt (110) verwendet wird.

7. Das Verfahren gemäß einem der vorhergehenden Ansprüche, **dadurch gekennzeichnet, dass** das Verfahren weiterhin Folgendes aufweist:
Trennen des kalzinierten Rohmehls (106) von RCOH bzw. RCOR, bevor es gesintert wird, und des im Umwandlungsschritt (120) erhaltenen CO₂, wodurch kalziniertes Rohmehl (103) und ein CO₂ aufweisendes Fluid und/oder mindestens eines von RCOH und RCOR erhalten werden.

8. Das Verfahren gemäß dem vorhergehenden Anspruch, **dadurch gekennzeichnet, dass** es weiterhin Folgendes aufweist:
- Abkühlen des im Trennschritt (125) erhaltenen Fluids unter die Kondensationstemperatur von RCOH und/oder RCOR, wobei die Temperatur über der Kondensationstemperatur von CO₂ bleibt;
- Separates Entziehen des flüssigen RCOH und/oder RCOR bzw. des gasförmigen CO₂.

9. Das Verfahren gemäß dem vorhergehenden Anspruch, **dadurch gekennzeichnet, dass**:
- ein indirekter Wärmetauscher zum Ausführen des Abkühlschritts verwendet wird, wodurch Wärme vom gekühlten Fluid auf ein Wärmeträgerfluid übertragen wird;
- Verwenden der auf das Wärmeträgerfluid übertragenen Wärme als Prozesswärme im Zementklinkerprozess und/oder in einem Kraftwerkprozess.

10. Das Verfahren nach einem der vorhergehenden Ansprüche, **dadurch gekennzeichnet, dass** die Carbonsäure gemäß Anspruch 1 und/oder Anspruch 5 und/oder 6 mindestens eine von Methansäure (H₂CO₂), Ethansäure (CH₃COOH), Propionsäure (CH₃CH₂CO₂H), Butansäure (CH₃CH₂CH₂CO₂H), Pentansäure (CH₃(CH₂)₃COOH), Hexansäure (CH₃(CH₂)₄COOH), Heptansäure (CH₃(CH₂)₅COOH), Octansäure (CH₃(CH₂)₆COOH), Nonansäure (CH₃(CH₂)₇COOH), Decansäure (CH₃(CH₂)₈COOH), Oxalsäure (HO₂C-CO₂H), Brenztraubensäure (CH₃COCOOH), Glyoxylsäure (OCHCOOH), Glykolsäure (HOCH₂CO₂H) und Methansulfonsäure (CH₃SO₃H) ist oder aufweist.

11. Das Verfahren nach einem der vorhergehenden Ansprüche, **dadurch gekennzeichnet, dass** das Ca(RCOO)₂ vor dem Einleiten der Zersetzung getrocknet wird und/oder dass der Reaktionsschritt (110) oberhalb des Siedepunkts von Wasser bei dem Druck stattfindet, bei dem der Reaktionsschritt durchgeführt wird.

12. Eine Zementklinker-Produktionslinie (200), aufweisend mindestens
- einen Ofen (400) zum Sintern von kalziniertem Rohmehl (103) zu Zementklinker (409), wobei der Ofen einen Einlass für kalziniertes Rohmehl und einen Klinker-Auslass hat,
- einen ersten Reaktor (270) mit mindestens einem ersten Einlass, einem zweiten Einlass, und einem ersten Auslass,
- wobei der erste Einlass mit einer Quelle und/oder einem Reservoir von Rohmehl verbunden ist,
- wobei der zweite Einlass mit einer Quelle und/oder einem Reservoir von Carbonsäure (203, 228) verbunden ist,
- wobei der erste Auslass ein Zwischenprodukt-Rohmehlauslass ist,
- einen ersten Heizer (290) mit
- einem Heizervolumen,
- einem ersten Auslass, wobei der erste Auslass des Heizers ein Auslass für kalziniertes Rohmehl ist,
- einen zweiten Auslass, wobei der zweite Auslass des Heizers ein Auslass für gasförmiges Fluid ist, welcher in Fluidkommunikation mit dem Heizervolumen steht,
- einen Zwischenprodukt-Rohmehleinlass,
wobei der Einlass für kalziniertes Rohmehl des Ofens (400) mit dem Auslass für kalziniertes Rohmehl des Heizers (290) verbunden ist,
wobei der Zwischenprodukt-Rohmehleinlass des Heizers (290) mit dem Zwischenprodukt-Rohmehlauslass des ersten Reaktors (270) verbunden ist.

13. Eine Zementklinker-Produktionslinie (200), **dadurch gekennzeichnet, dass** sie dazu konfiguriert ist, das Verfahren gemäß einem der Ansprüche 1 bis 11 auszuführen.

## Revendications

1. Procédé de production de farine crue calcinée (102) dans une ligne de clinker de ciment (200) à partir de farine crue (101), dans lequel la farine crue (101) comprend au moins du CaCO₃, le procédé comprenant au moins :
- la réaction de la farine crue (101) avec un acide carboxylique (RCOOH), produisant ainsi au moins du Ca(RCOO)₂, respectivement, dans lequel le symbole « *R* » représente un reste organique ; et
- la conversion du Ca(RCOO)₂ obtenu lors de l'étape de réaction en farine crue calcinée (103) par décomposition thermique du Ca(RCOO)₂ obtenu pour obtenir ainsi au moins du CaO, du CO₂ et du RCOH et/ou du *RCOR,* respectivement,
dans lequel un aldéhyde et/ou une cétone obtenus par décomposition thermique du Ca(RCOO)₂ obtenu sont retirés de la farine crue calcinée.

2. Procédé selon la revendication 1, **caractérisé en ce que**
- la réaction de la farine crue (101) avec l'acide carboxylique (RCOOH) a lieu à une température entre 100 °C et 300 °C et/ou 150 °C et 250 °C.

3. Procédé selon la revendication 1 ou 2, **caractérisé en ce que**
- l'étape de conversion (125) comprend le chauffage du Ca(RCOO)₂ à une température *T_{con}* ≤ 1000 °C, de préférence *T_{con}* ≤ 450 °C.

4. Procédé selon l'une des revendications précédentes, **caractérisé en ce que**
le procédé comprend en outre le frittage de la farine crue calcinée (103) dans un four à clinker de ciment (400) en clinker de ciment (409).

5. Procédé selon l'une des revendications précédentes, **caractérisé en ce que**
le CO₂ qui est produit lors de l'étape de réaction (115) et/ou de l'étape de conversion (120) et/ou de l'étape de frittage facultative (130) et/ou par la combustion de combustible est réduit par voie électrochimique en un acide carboxylique (RCOOH) au niveau de la cathode d'une cellule électrolytique.

6. Procédé selon la revendication précédente, **caractérisé en ce que**
l'acide carboxylique (RCOOH) obtenu par la transformation électrochimique (140) est utilisé comme acide carboxylique (RCOOH) dans l'étape de réaction (110).

7. Procédé selon l'une des revendications précédentes, **caractérisé en ce que** le procédé comprend en outre la séparation de la farine crue calcinée (106), avant son frittage, du RCOH et/ou du RCOR, respectivement, et du CO₂ qui est obtenu lors de l'étape de conversion (120), obtenant ainsi de la farine crue calcinée (103) et un fluide comprenant du CO₂ et/ou au moins l'un parmi du RCOH et du RCOR.

8. Procédé selon la revendication précédente, **caractérisé en ce qu'**il comprend en outre :
- le refroidissement du fluide obtenu lors de l'étape de séparation (125) en dessous de la température de condensation du RCOH et/ou du RCOR, dans lequel la température reste au-dessus de la température de condensation du CO₂ ;
- le retrait séparé du RCOH liquide et/ou du RCOR liquide, respectivement, et du CO₂ gazeux.

9. Procédé selon la revendication précédente, **caractérisé en ce que** :
- un échangeur de chaleur indirect est utilisé pour exécuter l'étape de refroidissement, transférant ainsi la chaleur du fluide refroidi vers un chauffage d'un fluide caloporteur ;
- l'utilisation de la chaleur qui a été transférée au fluide caloporteur comme chaleur de processus dans le processus de clinker de ciment et/ou dans un processus de centrale électrique.

10. Procédé selon l'une des revendications précédentes, **caractérisé en ce que** l'acide carboxylique de la revendication 1 et/ou de la revendication 5 et/ou 6 est ou comprend au moins l'un parmi : l'acide méthanoïque (H₂CO₂), l'acide éthanoïque (CH₃COOH), l'acide propionique (CH₃CH₂CO₂H), l'acide butanoïque (CH₃CH₂CH₂CO₂H), l'acide pentanoïque (CH₃(CH₂)₃COOH), l'acide hexanoïque (CH₃(CH₂)₄COOH), l'acide heptanoïque (CH₃(CH₂)₅COOH), l'acide octanoïque (CH₃(CH₂)₆COOH), l'acide nonanoïque (CH₃(CH₂)₇COOH), l'acide décanoïque (CH₃(CH₂)₈COOH), l'acide oxalique (HO2C-CO2H), l'acide pyruvique (CH₃COCOOH), l'acide glyoxylique (OCHCOOH), l'acide glycolique (HOCH₂CO₂H) et l'acide méthanesulfonique (CH₃SO₃H).

11. Procédé selon l'une des revendications précédentes, **caractérisé en ce que** le Ca(RCOO)₂ est séché avant d'induire la décomposition et/ou **en ce que** l'étape de réaction (110) a lieu au-dessus de la température d'ébullition de l'eau à la pression à laquelle l'étape de réaction est effectuée.

12. Ligne de clinker de ciment (200), comprenant au moins
- un four (400) destiné à fritter de la farine crue calcinée (103) en clinker de ciment (409), dans laquelle le four comporte une entrée de farine crue calcinée et une sortie de clinker,
- un premier réacteur (270) avec au moins une première entrée, une deuxième entrée et une première sortie,
- dans laquelle la première entrée est reliée à une source et/ou à un réservoir de farine crue,
- dans laquelle la deuxième entrée est reliée à une source et/ou à un réservoir d'un acide carboxylique (203, 228),
- dans laquelle la première sortie est une sortie de farine crue intermédiaire,
- un premier réchauffeur (290) avec
- un volume de réchauffeur,
- une première sortie, dans laquelle la première sortie du réchauffeur est une sortie de farine crue calcinée,
- une deuxième sortie, dans laquelle la deuxième sortie du réchauffeur est une sortie de fluide gazeux qui est en communication fluidique avec le volume de réchauffeur,
- une entrée de farine crue intermédiaire,
dans laquelle l'entrée de farine crue calcinée du four (400) est reliée à la sortie de farine crue calcinée du réchauffeur (290),
dans laquelle l'entrée de farine crue intermédiaire du réchauffeur (290) est reliée à la sortie de farine crue intermédiaire du premier réacteur (270).

13. Ligne de clinker (200) **caractérisée en ce qu'**elle est configurée pour exécuter le procédé selon l'une des revendications 1 à 11.
